Europäisches Patentamt

(19) European Patent Office

Office européen des brevets

(11) Publication number: **0 135 493**
**A1**

## (12) EUROPEAN PATENT APPLICATION

(21) Application number: **84870122.3**

(22) Date of filing: **20.08.84**

(51) Int. Cl.⁴: **C 08 L 35/06**
**C 08 L 55/02, C 08 L 69/00**

(30) Priority: **22.08.83 US 524943**

(43) Date of publication of application:
**27.03.85 Bulletin 85/13**

(84) Designated Contracting States:
**BE FR GB IT**

(71) Applicant: **Monsanto Company**
**Patent Department 800 North Lindbergh Boulevard**
**St. Louis Missouri 63167(US)**

(72) Inventor: **Jones, William Jacob**
**158 Central Park Drive**
**Holyoke Massachusetts 01040(US)**

(72) Inventor: **Dufour, Daniel Louis**
**Avenue de la Vallée 8**
**B-1410 Waterloo(BE)**

(74) Representative: **McLean, Peter et al,**
**Monsanto Europe S.A. Patent Department Avenue de**
**Tervuren 270-272 Letter Box No 1**
**B-1150 Brussels(BE)**

(54) Polyblends of thermoplastic copolyetheresters, styrene-maleic anhydride polymers, acrylonitrile-butadiene-styrene polymers, and polycarbonates.

(57) Molding compositions are prepared from blends of (A) a thermoplastic copolyetherester elastomer; (B) a styrene maleic anhydride polymer; (C) an ABS or MBS polymer; and (D) a polycarbonate. Component B, the styrene maleic anhydride polymer may optionally contain a termonomer such as methylmethacrylate or acrylonitrile and a rubber component.

POLYBLENDS OF THERMOPLASTIC COPOLYETHERESTERS,

STYRENE-MALEIC ANHYDRIDE POLYMERS,

ACRYLONITRILE-BUTADIENE-STYRENE POLYMERS,

AND POLYCARBONATES

BACKGROUND OF THE INVENTION

This invention relates to polyblends and specifically to polyblends of styrene-maleic anhydride (SMA) polymers, acrylonitrile-butadienestyrene (ABS) polymers and polycarbonates (PC) with certain thermoplastic copolyetheresters capable of conferring on the SMA polymers and blends thereof with ABS and PC improved impact properties.

SMA polymers of the type described herein and blends of the SMA polymers with ABS polymers and PC are useful as molding and extrusion compounds. Certain end-use applications require impact strengths above those obtained with SMA polymers and blends thereof with ABS and PC. Examples of such applications include the dashboard and instrument panels in automobiles, appliance housings and smaller molded parts for various uses. Other properties of the molded objects, such as Vicat softening temperature and tensile strength, should be maintained within useful ranges.

The present invention provides a means of improving the impact properties of SMA polymers and blends thereof with ABS and PC while using lower amounts of PC and maintaining other physical properties within useful ranges.

DESCRIPTION OF THE PRIOR ART

Polyblends of SMA and ABS type polymers are described in U.S.P. 4,197,376 and 4,305,869. Polyblends of SMA, ABS and PC are described in U.S.P. 4,218,544 and 4,367,310. Polyblends of SMA-acrylonitrile, ABS and PC are described in 4,205,140. Blends of SMA-type polymers and aromatic polyesters are described in U.S.P. 4,126,602. Copolyetherester elastomers are described in U.S.P. 3,023,192, 3,651,014, 3,766,146, 3,775,373, 3,784,520 and 3,891,604.

## SUMMARY OF THE INVENTION

The present invention provides a polyblend comprising:

A.    from 1 to 30% by weight of a thermoplastic copolyetherester elastomer;

B.    from 5 to 70% by weight of a polymer of a vinylaromatic monomer (e.g. styrene) and an unsaturated dicarboxylic acid anhydride monomer (e.g. maleic anhydride) and optionally a termonomer, preferably one selected from the group consisting of $C_1$ to $C_3$ acrylates and methacrylates and unsaturated nitriles, wherein the relative amounts by weight of the monomers in the polymer are 50 to 85% of the vinylaromatic monomer, 15 to 35% of the dicarboxylic acid anhydride and 0 to 20% of the termonomer; and wherein the monomers are polymerized in the presence of 0 to 25% by weight of a rubber having a glass transition temperature below 0°C.; and

C.    from 5 to 70% by weight of a grafted composition comprising a graft polymer of from 20 to 40 parts by weight of a monomer selected from the group consisting of methyl methacrylate and acrylonitrile and 80 to 60 parts by weight of a vinyl aromatic monomer the polymer being grafted onto a substrate rubber having a glass transition temperature below 0°C. wherein the monomers are polymerized in the presence of and grafted onto the substrate rubber, wherein the weight percent of the rubber is in the range from 5 to 60% by weight based on the weight of the composition;

D.    from 5 to 70% of polycarbonate; and wherein the weight percent for Components A, B, C and D is based on the total amount of Components (A), (B), (C) and (D) in the polyblend.

Thermoplastic copolyetherester elastomers which are suitable for use as Component A in the practice of the present invention are defined below. The term "thermoplastic copolyetherester elastomer" as used herein means a segmented polymer comprising about 30% to about 80% by weight of recurring linear etherester (soft) segments derived from difunctional polyether glycol and dicarboxylic acid and about 70% to about 20% by weight of recurring linear ester (hard) segments derived from organic diol and aromatic dicarboxylic acid. Polyether glycols having a number average molecular weight from about 350 to about 6000 are suitable with polyether glycols having a molecular weight between about 800 and 4000 being preferred. The aromatic ester hard segment represents a repeating unit of a fiber-forming polyester having a melting point above 150°C., preferably, about 200° in its fiber-forming molecular weight range, for example, polyethyleneterephthalate and polytetramethyleneterephahalate. For further details on the preparation, composition and properties of such segmented thermoplastic copolyetherester elastomers, see U.S. Patents 3,023,192; 3,651,014; 3,766,146; 3,775,373; 3,784,520 and 3,891,604, all assigned to E. I. duPont de Nemours and Company. Suitable segmented

thermoplastic copolyetherester elastomers derived from terephthalic acid, polytetramethylene ether glycol and 1,4-butanediol may be purchased from duPont under the trademark HYTREL® elastomer.

Further information on HYTREL® elastomers is contained in New Commercial Polymers, 1969-1975, by Hans-Georg Elias, Midland Macromolecular Institute, Midland, Michigan 48640, translated from the German by Mary M. Exner; Gordon and Breach Science Publishers (New York, London and Paris) at pages 85 to 89, and in Polymerization Reaction & New Polymers, Segmented Polyester Thermoplastic Elastomers by W. K. Witsiepe, published in Polymerization Reactions & New Polymers at pages 39 to 59, Amer. Chem. Soc. - Advances in Chemistry Series No.129 (edited by N. J. Platzer) 1973.

Component B of the above formulation is preferably a styrene/maleic anhydride polymer. The styrene may be replaced in whole or in part by other vinyl-aromatic monomers such as $\alpha$-methyl styrene, chlorostyrene, bromostyrene, p-methyl styrene and vinyl toluene. Similarly the maleic anhydride can be replaced in whole or in part by another unsaturated dicarboxylic anhydride such as itaconic, aconitic or citraconic anhydride. Component B optionally contains a termonomer such as $C_1$ to $C_3$ alkyl acrylate or methacrylate, acrylonitrile or methacrylonitrile. The preferred termonomer, where present, is methyl methacrylate.

The proportions of the monomers preferably employed provide an anhydride content of from 15 to 35% by weight and a methyl methacrylate content of 5 to 15% by weight with the balance being styrene.

Component C is typically an ABS or MBS type polymer that is to say a diene rubber substrate grafted with styrene and either acrylonitrile, methyl methacrylate, methyl acrylate or a mixture of these monomers. However the rubber need not be the conventional polybutadiene or butadiene/styrene copolymer since any rubber with a glass transition temperature below 0°C. can be used. Such rubbers include other rubbers such as EPDM rubber, polypentanamer, polyisoprene, polychloroprene, polyacrylate rubbers and the like. The styrene may be replaced in whole or in part by other styrenic monomer such as described with reference to Component B above. The acrylonitrile may be replaced in whole or in part by methacrylonitrile.

Component D is a polycarbonate resin which is suitable for injection or extrusion molding. Such polycarbonates are well known in the art and are commercially available. A variety of such polycarbonates or polycarbonate blends are disclosed in the following U.S. Patents, Nos. 3,649,712, 3,239,582, 3,742,088, 3,036,036 and 3,028,365.

In addition to the above components the polyblends of the invention can advantageously contain other additives such as plasticizers, antioxidants, stabilizers, flame-retardants, fibers, mineral fibers, dyes, pigments and the like.

The components of the polyblend can be blended together by any convenient process. Usually however they are extrusion blended or compounded in a high intensity blender such as a Banbury Mixer. When using greater than about 30% by weight of Component B the use of extrusion blending is preferred.

Components B and C can be together provided by the formulations described in U.S. Patents 4,305,869 and 4,197,376 and then blended with Component A.

The invention is now described with reference to the following examples which are for the purposes of illustration only and are not intended to imply any limitation on the scope of the invention. The components described below are blended in a number of different ratios and tested for various properties.

### FIGURES

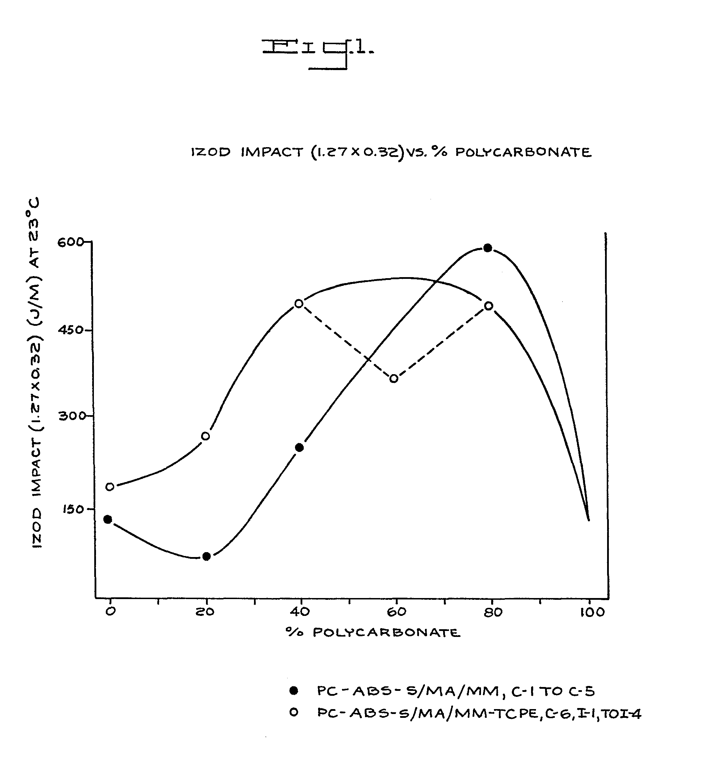

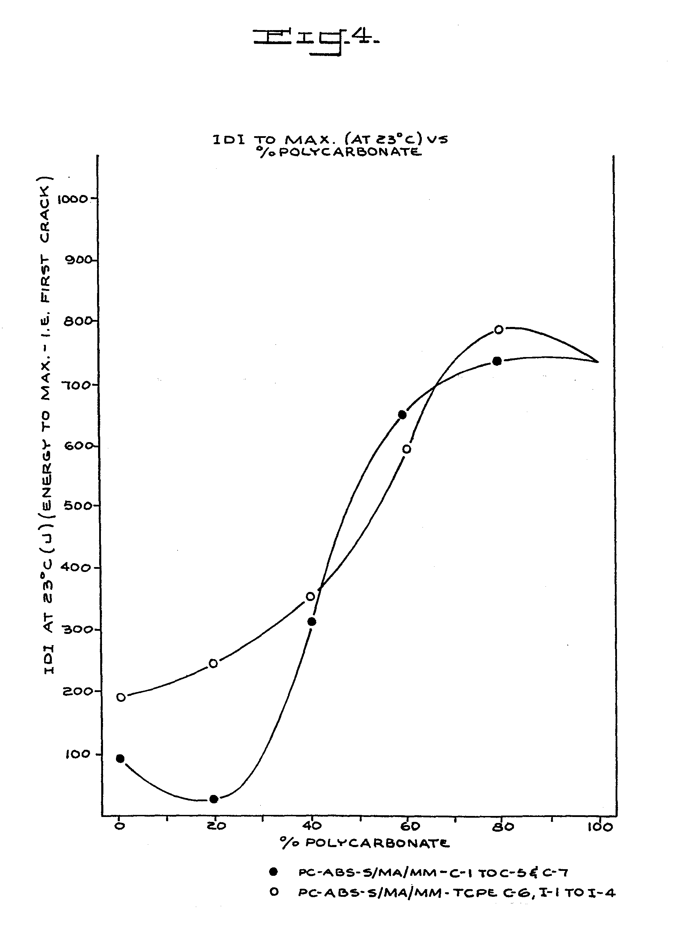

Figures 1 to 7 are plots of data taken from Tables 1 and 2. Figures 1, 2 and 3 are plots of Izod versus PC concentration in the polyblend showing improved Izod at lower PC concentrations with the addition of TCPE to the polyblend. Figures 4-7 are plots of IDI versus PC concentration in the polyblend showing improved IDI at lower PC concentration with the addition of TCPE to the polyblend.

### COMPONENTS USED

ABS-1 - prepared by the graft emulsion polymerization of styrene and acrylonitrile in a weight ratio of 70:30 in the presence of polybutadiene. ABS-1 contains 40% by weight of polybutadiene. The weight average molecular weight of the free SAN in the styrene/acrylonitrile graft polymer is in the range from 200,000 to 400,000 as determined by gel permeation chromatography [GPC] using ASTM Method D 3536-76 modified in that 4 columns in series using micro Styragel (Waters Assoc.) packing are used with a nominal exclusion limit of 500A units, 1,000A units, 10,000A units and 100,000A units. The detector is an ultraviolet light detector set at wavelength 254nm. The test samples are prepared at a concentration of 0.25% weight of polymer in tetrahydrofuran. The sample injection size is 0.2ml and a flow rate of 2ml/min. at ambient temperature is used.

The grafted polybutadiene has an average particle size in the range of from 0.1 to 0.25 micrometer measured as a weight average particle size diameter with centrifugal photosedimentometer (CPSM) by the published procedure of Graves, M. J. et al "Size Analysis of Subsieve Powders Using a Centrifugal Photosedimentometer", British Chemical Engineering 9:742-744 (1964). A Model 3000 Particle Size Analyzer from Martin Sweets Co., 3131 W. Market St., Louisville, KY is used.

ABS-2 - prepared by the graft suspension polymerization of styrene and acrylonitrile in a weight ratio of 72:28 in the presence of polybutadiene. ABS-2 contains 14% by weight of polybutadiene. The weight average molecular weight determined by GPC of the free SAN in the styrene/acrylonitrile graft polymer is in the range from 70,000 to 100,000 and the grafted polybutadiene has an average particle size in the range of from 0.6 to 1.6 micrometer.

S/MA - a copolymer prepared by polymerizing a monomer mixture of styrene and maleic anhydride to produce a composition in which the above monomers are in the weight ratio of 70:30.

S/MA/MM - a terpolymer prepared by polymerizing a monomer mixture of styrene, maleic anhydride and methyl methacrylate to produce a composition in which the above monomers are in the weight ratio of 72:22:6 respectively.

TCPE-1 - a thermoplastic copolyetherester elastomer which is a block copolymer of short-chain diol terephthalate and long-chain polyether diol terephthalate available from duPont Company, Elastomer Chemicals Department, Wilmington, DE 19898 under the designation HYTREL® 5556. This material, which comprises about 60% by weight of hard segments of polybutylene terephthalate and about 40% by weight of soft segments of polytetramethylene ether terephthalate, has a Durometer hardness (ASTM D-2240) of 55D, a melting point (ASTM D-2117) of 211°C.; a Vicat Softening Point (ASTM D1525) of 180°C and flexural modulus (ASTM D790) of 207 megapascals (MPa).

TCPE-2 - a thermoplastic copolyetherester elastomer which is a block copolymer of short-chain diol terephthalate and long-chain polyether diol terephthalate available from duPont Company, Elastomer Chemicals Department, Wilmington, DE 19898 under the designation HYTREL® 4056.  TCPE-2 is softer and has a lower flexural modulus than TCPE-1.  HYTREL® 4056, which comprises about 42% by weight of hard segments of polybutylene terephthalate and about 58% by weight of soft segments of polytetramethylene ether terephthalate, has a Durometer hardness of 92A/40D; a melting point of 168°C.; a Vicat Softening Point of 112°C. and flexural modulus of 48.3 MPa.

TCPE-3 - a thermoplastic copolyetherester elastomer which is a block copolymer of short-chain diol terephthalate and long-chain polyether diol terephthalate available from duPont Company, Elastomer Chemicals Department, Wilmington, DE 19898 under the designation HYTREL® 7246.  This material, which comprises about 80% by weight of hard segments of polybutylene terephthalate and about 20% by weight of soft segments of polytetramethylene ether terephthalate, has a Durometer hardness of about 72D; a melting point of 219°C.; a Vicat Softening Point of 207°C. and a flexural modulus of 585 MPa.

PC - a bisphenol A homopolycarbonate sold by Mobay Chemical Company under the tradename Merlon M50.

Glycolube TS - a glycerol tristearate plasticizer, available from Glyco.

Goodrite 3114 - an alkylated phenol antioxidant available from Goodrich.

SAMPLE PREPARATION AND TEST METHODS

The components used in the working examples are compounded in a Banbury mixer at 180 to 250°C.  The resulting blends are injection molded on an Arburg Molding Machine at 220 to 270°C. and 3.44 to 13.8 MPa.  The molded samples are subjected to the following tests:

Flexural Modulus and Flexural Strength - ASTM (D-790), Procedure B, 1.27 x 0.64 x 12.7cm Sample size, the results are given in megapascals (MPa);

VICAT Softening Point (ASTM-D-1525-76-Rate B) a one (1) kg test using a heat rate of 120°C. per hour, the results are given in °C.;

Izod Impact (ASTM D-256-56) with results given in Joules/meter (J/M) sample sizes 1.27 X 1.27cm, 1.27 X 0.64cm, and 1.27 X 0.32cm.;

Viscosity - Dayton (ASTM-D-3835) using a temperature of 246°C. and a shear rate of 100 reciprocal seconds $(100sec^{-1})$. The results are given in pascal seconds (Pa.s).

Tensile Strength and % Elongation to Fail (ASTM-D-638) results given in megapascals (MPa);

Multiaxial Inverted Dart Impact (IDI) - a modification of the test as described in Society of Plastics Engineers National Technical Conference "Plastics in Surface Transportation Nov. 12-14, 1974 Detroit, Mich. page 238. In the modified test, instead of the dart being attached to the slider and striking the sample, the sample holder is attached to the slider and strikes the instrumented dart. The rotary potentiometer is not used. The instrumented dart used is 1.27 cm in diameter, and the sample strikes the instrumented dart at a velocity of 111.76 m/min. The samples are injection molded into 7.62 cm x 10.16 cm x 0.254 cm and then are cut into 3.81 cm x 5.08 cm x 0.254 cm pieces for testing. The results are given in Joules (J).

The energy to maximum is the energy needed to achieve the yielding of a ductile sample. The energy to failure represents the energy necessary to cause a failure of a sample. The test is run at room temperature and at -20°C. to determine the effect of temperature on the performance of the polymer. The difference between the energy to fail and the energy to maximum indicates the ductility of the sample and the difference increases with ductility.

Sidewinder flow - a comparative test of the polymer flow characteristics. In the test the polymer is injected into a generally sinusoidal mold under given injection pressure, temperature and shot-time conditions. The distance (in cm) along the mold reached by the polymer is an indication of the readiness with which it flows by comparison with other polymers tested under the same conditions. The samples were run at 510°C. melt.

## WORKING EXAMPLES AND TEST RESULTS

In Controls C-1 to C-7 and Examples I-1 to I-8, various polyblends are prepared and tested and the results tabulated in Tables 1 to 3. Control Examples C-1 to C-7 are included for comparison purposes. All Examples are prepared using 0.3% by weight Goodrite 3114 and 2.5% by weight Glycolube TS based on total weight of polymeric components (A), (B), (C) and (D). The amounts of the polymeric components (A), (B), (C) and (D) used are parts by weight and are calculated to add up to a 100 parts by weight total.

## CONTROLS C-1 to C-5

Control Examples C-1 to C-5, tabulated in Table 1 show the effect of varying polycarbonate (PC) concentration in S/MA/MM-ABS polyblends. The Izod impact data shows, for the 1.27 x 1.27cm. samples a maximum at 80% by weight PC (See Figure 1). The Izod impact data for the 1.27 x 0.64 cm. and the 1.27 x 0.32 cm. data show a maximum at 60% by weight PC. (See Figures 2 and 3). The IDI data taken at 23°C. show for both IDI to maximum and IDI to fail above 20% by weight PC, rapidly increasing IDI values and the highest values at 60% by weight PC and greater. (See Figures 4 and 5). The same is true for IDI data taken at -20°C. The Vicat softening point generally increases with PC concentration.

### EXAMPLES I-1 to I-4, C-6 AND C-7

Examples I-1 to I-4 and Control Examples C-6 and C-7, tabulated in Table II, show the effect of PC concentration on S/MA/MM, ABS and TCPE polyblends. Comparing, in Figure 1, Example I-2 with 40% by weight PC and 6% by weight TCPE-2 to Control Example C-3 with 40% by weight PC and no TCPE-2, with 6% by weight TCPE present, twice the Izod impact strength at the same PC concentration is obtained. In other words, it would take nearly 30% more PC to get the same improvement that 6% by weight TCPE gives in the same polyblend.

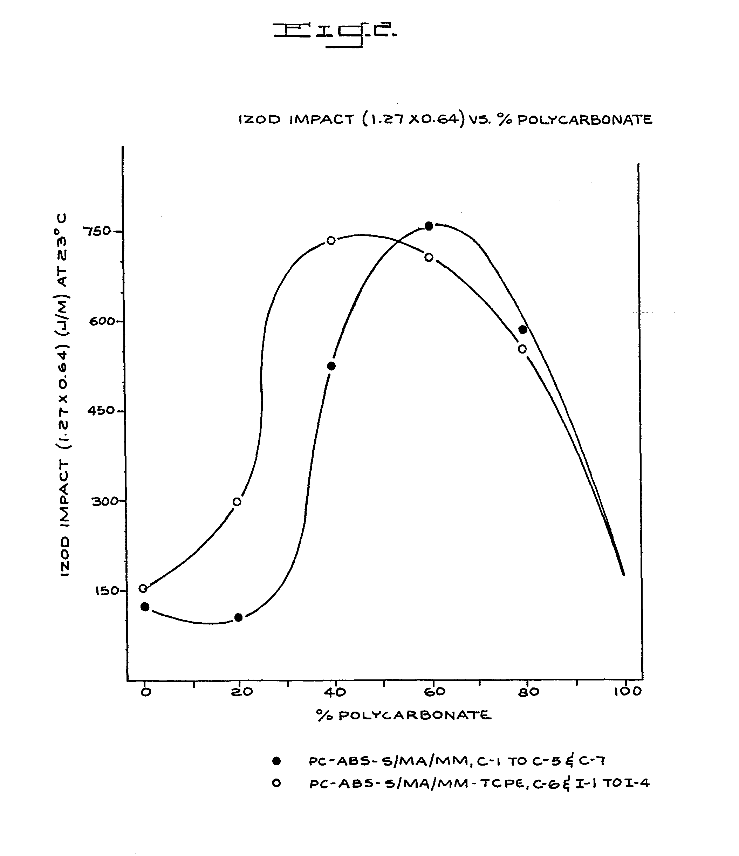

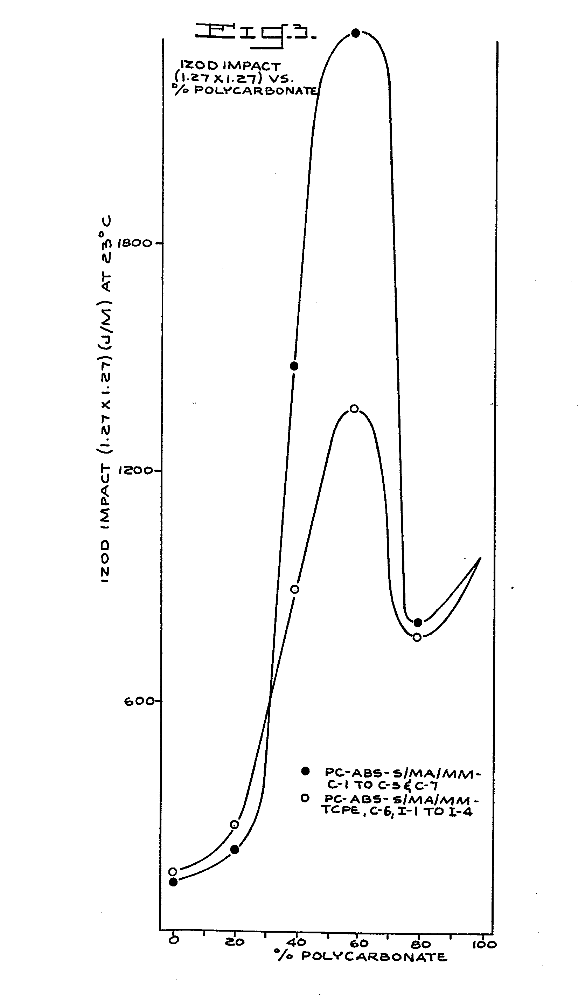

Likewise, as seen in Figure 2, comparing Example I-2 to Control Example C-3, about a 30% improvement in Izod impact using thinner samples, (1.27 X 0.64cm) is obtained by adding 6% by weight TCPE. In Figure 3, comparing Example I-1 containing 20% by weight PC and 8% by weight TCPE-2 to Control Example C-2 containing 20% by weight PC and no TCPE-2, about a 30% increase in Izod for very thin samples, i.e. 1.27 x 0.32 cm is achieved by adding 8% by weight TCPE-2. Therefore, Izod impact can be increased by adding TCPE-2, or maintained by decreasing PC and adding TCPE-2.

In comparing Example I-1 to Control Example C-2 in Figure 4, it can be seen that for IDI to maximum at 23°C. that 8% by weight TCPE increases IDI by a factor of 10 (1000%). To achieve the same IDI value without TCPE, nearly twice as much PC would have to be used.

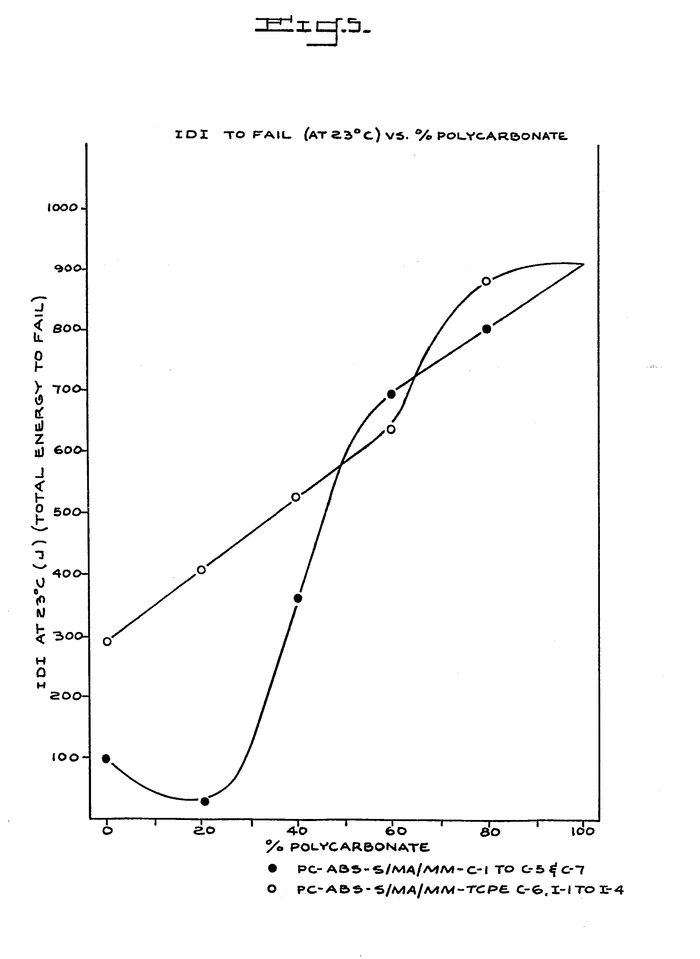

In comparing Example I-1 to Control Example C-2 in Figure 5, it can be seen that for IDI to fail, 8% by weight TCPE increases IDI about 15 fold (1500%). To achieve the same IDI value without TCPE, about twice as much PC would have to be used. Likewise, comparing Example I-2 to Control Example C-3, 6% by weight TCPE results in about a 30% increase in IDI.

**0135493**

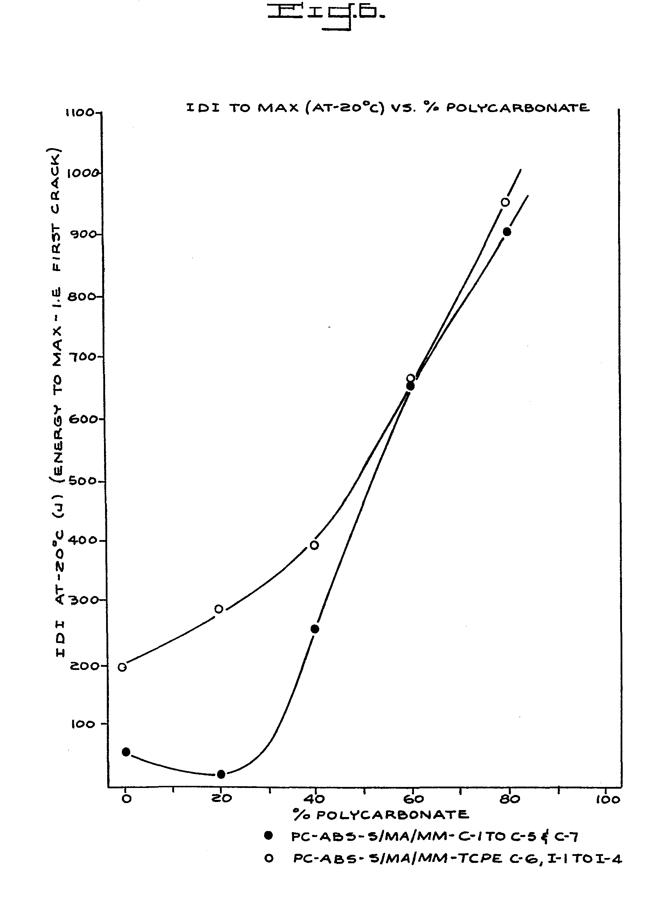

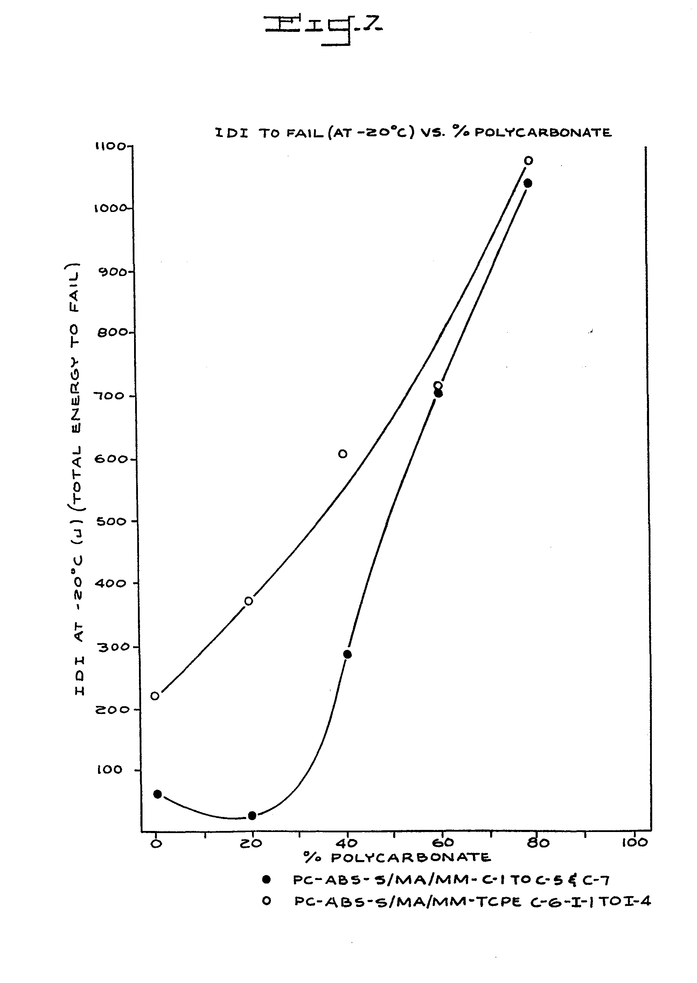

Comparing Example I-1 to Control Example C-2 in Figures 6 and 7, a 10 to 15 fold increase in IDI at -20°C., is observed with the addition of 8% by weight TCPE. Comparing I-2 to C-3, an increase of 50 to 100% in IDI is observed with the addition of 6% by weight TCPE.

The results of the Izod data varies, depending on the thickness of the sample tested. For the thickest sample, 1.27 x 1.27cm, an optimum is reached at 40% by weight PC and 6% by weight TCPE-2 (Example I-2) and maintained until higher than 80% by weight PC. The Example I-3 Izod data for 1.27 X 1.27cm sample appears to be an anomaly. A single optimum would be expected, as that observed for the 1.27 x 0.64cm and 1.27 x 0.32cm samples. For the 1.27 x 0.64cm Izod samples (Example I-2), an optimum is reached at 40% by weight PC and 6% by weight TCPE-2. For the thinnest samples, 1.27 x 0.32cm, a distinct optimum is reached at 60% by weight PC and 4% by weight TCPE-2 (Example I-3).

The IDI to fail at 23°C. increased with PC content. The IDI to maximum at 23°C. reached an optimum at 80% by weight PC (Example I-4). The $\Delta$ value for IDI to fail and IDI to maximum at 23°C. varied and shows no clear optimum.

The IDI to fail at -20°C. and the IDI to maximum both increase with PC content. The $\Delta$ value for IDI to fail and IDI to maximum at -20°C. shows a clear optimum at 40% by weight PC (Example I-2).

The Vicat temperature decreases slightly (1°C.) with the addition of PC (Compare Examples I-1 and I-2) and then shows a marked increase with the further addition of PC. Likewise, the viscosity shows an initial decrease with the addition of PC (I-1) and then shows a marked increase with the further addition of PC.

The Sidewinder flow shows a decrease with the addition of PC, and Flexural Strength shows an increase with PC addition. Tensile strength and % elongation to fail both increase with increasing PC concentration.

The increase in viscosity and the decrease in Sidewinder flow both make injection molding more difficult. Therefore, there is an advantage in being able to achieve higher impact properties with lower PC concentrates and therefore lower viscosity and higher Sidewinder flow.

TABLE I

S/MA/MM - ABS - POLYCARBONATE POLYBLENDS

| | C-1 | C-2 | C-3 | C-4 | C-5 |
|---|---|---|---|---|---|
| S/MA/MM | 50 | 40 | 30 | 20 | 10 |
| ABS-1 | 37.7 | 30.2 | 22.6 | 15.1 | 8.5 |
| ABS-2 | 12.3 | 9.8 | 7.4 | 4.9 | 2.5 |
| PC | 0 | 20 | 40 | 60 | 80 |
| Izod Impact | | | | | |
| (1.27x1.27cm) | 125 | 65 | 239 | 456 | 586 |
| (1.27x0.64cm) | 119 | 98 | 521 | 759 | 591 |
| (1.27x0.32cm) | 130 | 201 | 1448 | 2310 | 803 |
| IDI (23°C.) fail | 8.70 | 2.37 | 31.19 | 59.44 | 68.36 |
| max. | 8.14 | 2.03 | 27.46 | 56.27 | 63.96 |
| $\triangle$ | 0.56 | 0.34 | 3.73 | 3.17 | 4.40 |
| (-20°C.) fail | 4.97 | 2.03 | 24.86 | 61.70 | 90.40 |
| max. | 4.86 | 2.03 | 21.81 | 56.50 | 77.97 |
| $\triangle$ | 0.11 | 0 | 3.05 | 5.20 | 12.43 |
| Vicat S.P. | 132.9 | 134.4 | 137.5 | 139.8 | 142.2 |
| Viscosity | 1110 | 1140 | 1150 | 1410 | 1700 |
| Sidewinder flow | 33.0 | 30.0 | 28.5 | 23.8 | 14.5 |
| Flexural Strength | 58.15 | 64.08 | 69.9 | 76.27 | 78.48 |
| Flexural Modulus | 2060 | 2060 | 2060 | 2060 | 2060 |
| Tensile Strength | | | | | |
| (Yield) | 35.5 | 40.6 | 45.1 | 50.3 | 54.8 |
| (fail) | 30.0 | 34.6 | 44.0 | 48.0 | 62.3 |
| % Elongation | | | | | |
| (fail) | 5 | 11 | 147 | 138 | 181 |

## TABLE II
### S/MA/MM - ABS - Polycarbonate - TCPE Polyblends

|  | C-6 | I-1 | I-2 | I-3 | I-4 | C-7 |
|---|---|---|---|---|---|---|
| S/MA/MM | 45 | 36 | 27 | 18 | 9 | 0 |
| ABS-1 | 33.9 | 27.1 | 20.3 | 13.6 | 6.8 | 0 |
| ABS-2 | 11.1 | 8.9 | 6.7 | 4.4 | 2.2 | 0 |
| PC | ·0 | 20 | 40 | 60 | 80 | 100 |
| TCPE-2 | 10 | 8 | 6 | 4 | 2 | 0 |
| Izod Impact |  |  |  |  |  |  |
| (1.27x1.27cm) | 173 | 244 | 499 | 358 | 499 | 130 |
| (1.27x0.64cm) | 146 | 293 | 732 | 678 | 553 | 179 |
| (1.27x0.32cm) | 146 | 276 | 895 | 1358 | 765 | 981 |
| IDI (23°C.) |  |  |  |  |  |  |
| fail | 24.6 | 35.5 | 45.1 | 54.4 | 75.7 | 78.2 |
| max. | 16.2 | 21.9 | 30.4 | 51.4 | 68.5 | 63.7 |
| $\Delta$ | 8.4 | 13.6 | 14.7 | 3.0 | 7.2 | 14.5 |
| (-20°C.) |  |  |  |  |  |  |
| fail | 18.9 | 32.1 | 52.9 | 61.9 | 93.8 | no |
| max. | 16.9 | 24.5 | 33.8 | 56.2 | 81.7 | break |
| $\Delta$ | 2.0 | 7.6 | 19.1 | 15.7 | 12.1 |  |
| Vicat | 131.2 | 130.2 | 130.2 | 133.7 | 139.9 | 156 |
| Viscosity | 930 | 880 | 980 | 1260 | 1600 | – |
| Sidewinder flow | 34.8 | 33.0 | 30.2 | 23.3 | 15.0 | – |
| Flexural Strength | 53.8 | 60.3 | 68.8 | 75.1 | 85.5 | 85.4 |
| Flexural Modulus | 1715 | 1970 | 2060 | 2060 | 2060 | 2060 |
| Tensile Strength yield | 36.24 | 41.13 | 46.71 | 50.78 | 57.81 | 56.02 |
| fail | 29.56 | 32.38 | 38.31 | 50.43 | 63.59 | 70.97 |
| % Elongation (fail) | 6 | 18 | 121 | 162 | 180 | 207 |

## EXAMPLES I-5 to I-8

Examples I-5 and I-6 illustrate the use of S/MA in place of the S/MA/MM used in the other polyblends. The copolymer shows improved Izod for the thicker samples, but the terpolymer shows a slightly higher Vicat softening point. Examples I-7 and I-8 show that different copolyetherester elastomers can be used in the practice of this invention. Although TCPE-2 polyblend in Example I-6 has the highest Izod, the low temperature IDI and Vicat increase with TCPE-1 and TCPE-3 in Examples I-7 and I-8 respectively.

## TABLE III
### POLYBLENDS VARYING COPOLYETHERESTERS

|  | I-5 | I-6 | I-7 | I-8 |
|---|---|---|---|---|
| S/MA/MM | 27 | 0 | 27 | 27 |
| S/MA | 0 | 27 | 0 | 0 |
| ABS-1 | 20.3 | 20.3 | 20.3 | 20.3 |
| ABS-2 | 6.7 | 6.7 | 6.7 | 6.7 |
| PC | 40 | 40 | 40 | 40 |
| TCPE-1 | 0 | 0 | 6.0 | 0 |
| TCPE-2 | 6.0 | 6.0 | 0 | 0 |
| TCPE-3 | 0 | 0 | 0 | 6.0 |
| | | | | |
| Izod Impact | | | | |
| (1.27x1.27 cm) | 342 | 466 | 136 | 260 |
| (1.27x0.64 cm) | 640 | 710 | 315 | 445 |
| (1.27x0.32 cm) | 895 | 862 | 759 | 1085 |
| IDI (23°C) | | | | |
|   fail | 40.9 | 41.4 | 42.3 | 43.7 |
|   Max | 28.3 | 28.3 | 28.9 | 31.4 |
|   $\Delta$ | 12.6 | 13.1 | 13.4 | 12.3 |
| | | | | |
| (-20°C) fail | 40.5 | 34.3 | 45.1 | 42.4 |
|   Max | 31.3 | 28.0 | 32.7 | 31.8 |
|   $\Delta$ | 9.2 | 6.3 | 12.4 | 10.6 |
| | | | | |
| Vicat | 131.8 | 128.3 | 132.6 | 132.7 |

CLAIMS

1. A polyblend comprising:

A. from 1 to 30% by weight of a thermoplastic copolyetherester elastomer;

B. from 5 to 70% by weight of a polymer of a vinylaromatic monomer and an unsaturated dicarboxylic acid anhydride monomer and optionally a termonomer preferably one selected from the group consisting of $C_1$ to $C_3$ acrylates and methacrylates and unsaturated nitriles, wherein the relative amounts of weight of the monomers in the polymer are 50 to 85% of the vinylaromatic monomer, 15 to 35% of the dicarboxylic acid anhydride and 0 to 25% by weight of a rubber having a glass transition temperature below 0°C.; and

C. from 5 to 70% by weight of a grafted composition comprising a graft polymer of from 20 to 40 parts by weight of a monomer selected from the group consisting of methyl methacrylate and acrylonitrile and 80 to 60 parts by weight of a vinyl aromatic monomer the polymer being grafted onto a substrate rubber having a glass transition temperature below 0°C. wherein the monomers are polymerized in the presence of and grafted onto the substrate rubber, wherein the weight percent of the rubber is in the range from 5 to 60% by weight based on the weight of the composition.

D. from 5 to 70% of polycarbonate; and wherein the weight percent for Components A, B, C and D is based on the total amount of Components (A), (B), (C) and (D) in the polyblend.

2. A polyblend as in Claim 1 wherein the copolyetherester is in the range from 2 to 20% by weight and the weight ratio of the polymer of vinyl aromatic monomer and dicarboxylic acid anhydride monomer to the grafted polymer composition is in the range from 20:80 to 80:20.

3. A polyblend as in Claim 1 wherein the copolyetherester is in the range from 2 to 10% by weight and the weight ratio of the polymer of vinyl aromatic monomer and dicarboxylic acid anhydride monomer to the grafted polymer composition is in the range from 20:80 to 80:20.

4. A polyblend as in Claim 1 wherein the copolyetherester is in the range from 2 to 10% by weight and the weight ratio of the polymer of vinyl aromatic monomer and dicarboxylic acid anhydride monomer to the grafted polymer composition is in the range from 30:70 to 70:30.

5. A polyblend as in Claim 1 wherein the polyetherester comprises a polytetramethylene ether terephthalate soft segment and a polybutylene terephthalate hard segment.

6. A polyblend as in Claim 1 wherein Component B is a styrene maleic anhydride polymer.

7. A polyblend as in Claim 1 wherein the grafted polymer of Component C is ABS.

8. A polyblend comprising:

A. from 2 to 20% by weight of a thermoplastic copolyetherester elastomer comprising a polytetramethylene ether terephthalate soft segment and a polybutylene terephthalate hard segment;

B. from 5 to 70% by weight of a styrene maleic anhydride polymer comprising 50 to 85% by weight of styrene, 15 to 35% by weight of maleic anhydride and 0 to 20% of a methyl methacrylate termonomer.

C.   from 5 to 70% by weight of a graft polymer composition comprising a graft polymer of from 20 to 40 parts by weight of acrylonitrile or methyl methacrylate and 80 to 60 parts by weight of styrene, the polymer being grafted onto a butadiene rubber having a glass transition temperature below 0°C. wherein the monomers are polymerized in the presence of and grafted onto the substrate rubber, wherein the weight percent of the rubber is in the range from 5 to 60% by weight based on the weight of the composition.

D.   from 5 to 70% of polycarbonate; and wherein the weight ratio of the styrene maleic anhydride polymer to the grafted polymer composition is in the range of 80:20 to 20:80; and wherein the weight percent for Components (A), (B), (C) and (D) is based on the total amount of Components (A), (B), (C) and (D) in the polyblend.

9.   A polyblend as in Claim 8 wherein the copolyetherester is in the range from 2 to 10% by weight and the weight ratio of the polymer of styrene maleic anhydride polymer to the grafted polymer composition is in the range from 30:70 to 70:30.

10.   A polyblend as in Claim 8 wherein the styrene maleic anhydride polymer contains 5 to 15% by weight of a methyl methacrylate termonomer and wherein the grafted polymer of Component C is ABS.

11.   A polyblend according to any one of Claims 1 to 10 comprising:

A.   a copolyetherester which comprises a polytetramethylene ether terephthalate soft segment and a polybutylene terephthalate hard segment;

B.   a styrene maleic anhydride methyl methacrylate terpolymer;

C.   an ABS grafted polymer; and

D.   polycarbonate.

12.   A polyblend according to Claim 1 wherein the polymer of the vinyl aromatic monomer and the unsaturated dicarboxylic acid anhydride of Component B is prepared by polymerizing the monomers in the presence of rubber component having a glass transition temperature below 0°C. to provide from 10 to 25% by weight of rubber in the polymer.

13.   Molded and extruded articles prepared from a polyblend comprising:

A.   from 1 to 30% by weight of a thermoplastic copolyetherester elastomer;

B.   from 5 to 70% by weight of a polymer of a vinylaromatic monomer and an unsaturated dicarboxylic acid anhydride monomer and optionally a termonomer, selected from the group consisting of $C_1$ to $C_3$ acrylates and methacrylates and unsaturated nitriles, wherein the relative amounts by weight of the monomers in the polymer are 50 to 85% of the vinylaromatic monomer, 15 to 35% of the dicarboxylic acid anhydride and 0 to 20% of the termonomer; and wherein the monomers are polymerized in the presence of 0 to 25% by weight of a rubber having a glass transition temperature below 0°C.; and

C.   from 5 to 70% by weight of a grafted polymer composition comprising a graft polymer of from 20 to 40 parts by weight of a monomer selected from the group consisting of methyl methacrylate and acrylonitrile and 80 to 60 parts by weight of a vinyl aromatic monomer, the polymer being grafted onto a substrate rubber having a glass transition temperature below 0°C. wherein the monomers are polymerized in the presence of and grafted onto the substrate rubber, wherein the weight percent of the rubber is in the range from 5 to 60% by weight based on the weight of the composition;

D.  from 5 to 70% of polycarbonate;
and wherein the weight percent for Components (A),
(B), (C) and (D) is based on the total amount of
Components (A), (B), (C) and (D) in the polyblend.

# Fig.1.

IZOD IMPACT (1.27 × 0.32) VS. % POLYCARBONATE

*y-axis:* IZOD IMPACT (1.27×0.32) (J/M) AT 23°C

*x-axis:* % POLYCARBONATE

● PC-ABS-S/MA/MM, C-1 TO C-5
○ PC-ABS-S/MA/MM-TCPE, C-6, I-1, TO I-4

Fig.2.

IZOD IMPACT (1.27 X 0.64) VS. % POLYCARBONATE

● PC-ABS-S/MA/MM, C-1 TO C-5 & C-7

○ PC-ABS-S/MA/MM-TCPE, C-6 & I-1 TO I-4

Fig.3.

IZOD IMPACT
(1.27 X 1.27) VS.
% POLYCARBONATE

● PC-ABS-S/MA/MM-
   C-1 TO C-5 & C-7
○ PC-ABS-S/MA/MM-
   TCPE, C-6, I-1 TO I-4

## Fig.4.

IDI TO MAX. (AT 23°C) VS % POLYCARBONATE

● PC-ABS-S/MA/MM-C-I TO C-5 & C-7

O PC-ABS-S/MA/MM-TCPE C-6, I-I TO I-4

## Fig.5.

IDI TO FAIL (AT 23°C) VS. % POLYCARBONATE

- ● PC-ABS-S/MA/MM-C-1 TO C-5 & C-7
- ○ PC-ABS-S/MA/MM-TCPE C-6, I-1 TO I-4

## Fig.6.

IDI TO MAX (AT-20°C) VS. % POLYCARBONATE

% POLYCARBONATE

● PC-ABS-S/MA/MM- C-1 TO C-5 & C-7

O PC-ABS- S/MA/MM-TCPE C-6, I-1 TO I-4

Fig.7

IDI TO FAIL (AT -20°C) VS. % POLYCARBONATE

● PC-ABS-S/MA/MM-C-1 TO C-5 & C-7

○ PC-ABS-S/MA/MM-TCPE C-6-I-1 TO I-4

## EUROPEAN SEARCH REPORT

**European Patent Office**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-4 329 272  (D.L. DUFOUR) <br> * Claims * <br><br> ----- | 1 | C 08 L   35/06 <br> C 08 L   55/02 <br> C 08 L   69/00 |

**TECHNICAL FIELDS SEARCHED (Int. Cl. ³)**

C 08 L

The present search report has been drawn up for all claims

| Place of search <br> THE HAGUE | Date of completion of the search <br> 19-12-1984 | Examiner <br> FOUQUIER J.P. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82